# EUROPEAN PATENT SPECIFICATION

(11) **EP 3 495 650 B1**
(45) Date of publication and mention of the grant of the patent: **17.02.2021**
(21) Application number: 18215689.3
(22) Date of filing: 11.10.2007
(51) Int. Cl.: F02K 1/00, F02K 1/12

(54) **METHOD OF VARYING AN ANNULAR FAN EXIT AREA OF A GAS TURBINE ENGINE**
VERFAHREN ZUM VERSTELLEN DER RINGFÖRMIGEN FAN-AUSTRITTSFLÄCHE EINES GASTURBINENTRIEBWERKS
PROCÉDÉ POUR VARIER LA SECTION ANNULAIRE DE SORTIE DE SOUFFLANTE D'UN MOTEUR DE TURBINE À GAZ

(30) Priority: 17.10.2006 US 58221906
(43) Date of publication of application: 12.06.2019
(62) Divisional of application: 07254045.3
(73) Proprietor: United Technologies Corporation, Farmington, CT 06032 (US)
(72) Inventor: WINTER, Michael, New Haven, CT 06515 (US); HANSON, Russell B., Jupiter, FL 33478 (US)
(74) Representative: Dehns

(56) References cited:
- WO-A1-2008/045050
- WO-A1-2008/045062
- WO-A1-2008/045082
- US-A- 6 067 793
- US-A1- 2005 126 174
- US-A1- 2005 151 012

## Description

### BACKGROUND OF THE INVENTION

The present invention relates to a gas turbine engine, and more particularly to a turbofan gas turbine engine having a thrust vectorable variable area nozzle structure within the fan nacelle thereof.

In an aircraft turbofan engine, air is pressurized in a compressor and mixed with fuel in a combustor for generating hot combustion gases which flow downstream through turbine stages that extract energy therefrom. A high pressure turbine powers the compressor, and a low pressure turbine powers a fan disposed upstream of the low pressure compressor.

Combustion gases are discharged from the core engine through a core exhaust nozzle and fan air is discharged through an annular fan exhaust nozzle defined at least partially by a nacelle surrounding the core engine. A majority of propulsion thrust is provided by the pressurized fan air discharged through the fan exhaust nozzle, the remaining thrust provided from the combustion gases discharged through the core exhaust nozzle.

It is known in the field of aircraft gas turbine engines that optimum performance of the engine may be achieved during different flight conditions of an aircraft by tailoring the exit area for specific flight regimes such as take off, cruise maneuver, and the like. In combat aircraft, the necessity of high performance requires the expense, weight, and increased complexity of a variable area nozzle structure through which all exhaust is directed. However, such considerations have precluded the incorporation of a variable area nozzle for the fan air of a turbofan gas turbine engine propulsion system typical of commercial and military transport type aircraft.

Accordingly, it is desirable to provide an effective, relatively inexpensive variable area nozzle for a gas turbine engine fan nacelle.

WO 2008/045082, which represents prior art under Art. 54(3) EPC, discloses a method of varying an annular fan exit throat area of a gas turbine engine by independently adjusting groups of hinged flaps using ring segments which are angularly movable by actuators and guided by tracks.

Further prior art methods are disclosed in WO 2008/045062 A1, US 6 067 793 A and WO 2008/045050 A1.

### SUMMARY OF THE INVENTION

An aspect of the present invention provides a method of varying an annular fan exit throat area of a gas turbine engine as set forth in claim 1.

In operation, adjustment of the entire periphery of the thrust vectorable FVAN in which all segments are moved simultaneously is utilized to maximize engine thrust and fuel economy during each flight regime. By separately adjusting certain segments of the thrust vectorable FVAN in an asymmetric manner, engine thrust is selectively vectored to provide, for example only, trim balance or thrust controlled maneuvering.

The present invention therefore provides an effective, relatively inexpensive variable area nozzle for a gas turbine engine fan nacelle.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1A is a general schematic view an exemplary turbo fan engine embodiment for use with the present invention;
Figure 1B is a perspective partial fragmentary view of the engine;
Figure 1C is a rear view of the engine;
Figure 2A is a perspective view of a section of the thrust vectorable FVAN;
Figure 2B is a schematic plan view of the synchronizing ring assembly and the segments thereof;
Figure 2C is an exploded view of the linkage for one flap of the thrust vectorable FVAN;
Figure 2D is a schematic view of a slot within the synchronization ring of the thrust vectorable FVAN;
Figure 3A is an exploded view of one flap of the thrust vectorable FVAN;
Figure 3B is a rear view illustrating the sliding tongue and groove interface between two flaps of the flap assembly;
Figure 4A is a rear view of a section of the thrust vectorable FVAN;
Figure 4B is a side view of the flap assembly in a multiple of positions;
Figure 4C is a perspective view of the flap assembly in a multiple of positions in which each flap is shown in a different position;
Figure 5A is a schematic rear view of the thrust vectorable FVAN in an example constricted position wherein each segment has been positioned in a synchronized manner to reduce the fan exit throat area; and
Figure 5B is a schematic rear view of the thrust vectorable FVAN in an example thrust vectored position wherein the lower segments are asymmetrically positioned relative the upper segments to vector the thrust exiting the fan exit throat area in an "up" direction toward the engine flow.

### DETAILED DESCRIPTION OF THE PREFERRED EMBODIMENT

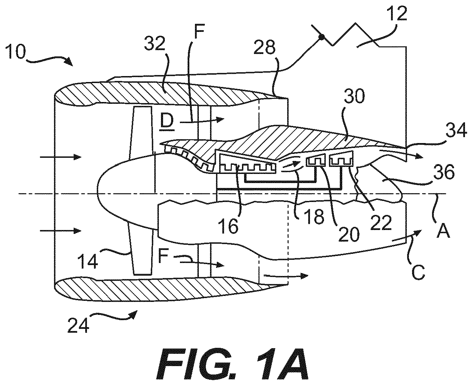

Figure 1A illustrates a general partial fragmentary view of a gas turbofan engine 10 suspended from an engine pylon 12 as typical of an aircraft designed for subsonic operation. The engine 10 is preferably a high-bypass turbofan aircraft engine. The engine 10 typically includes in serial flow communication a fan 14 with a low pressure compressor, a high pressure compressor 16, an annular combustor 18, high pressure turbine 20, and low pressure turbine 22. During operation, air is pressurized in the compressor and mixed with fuel in the combustor for generating hot combustion gases which flow through the high and low pressure turbines that extract energy therefrom. The high pressure turbine powers the compressor through a shaft therebetween, and the low pressure turbine powers the fan through another shaft therebetween.

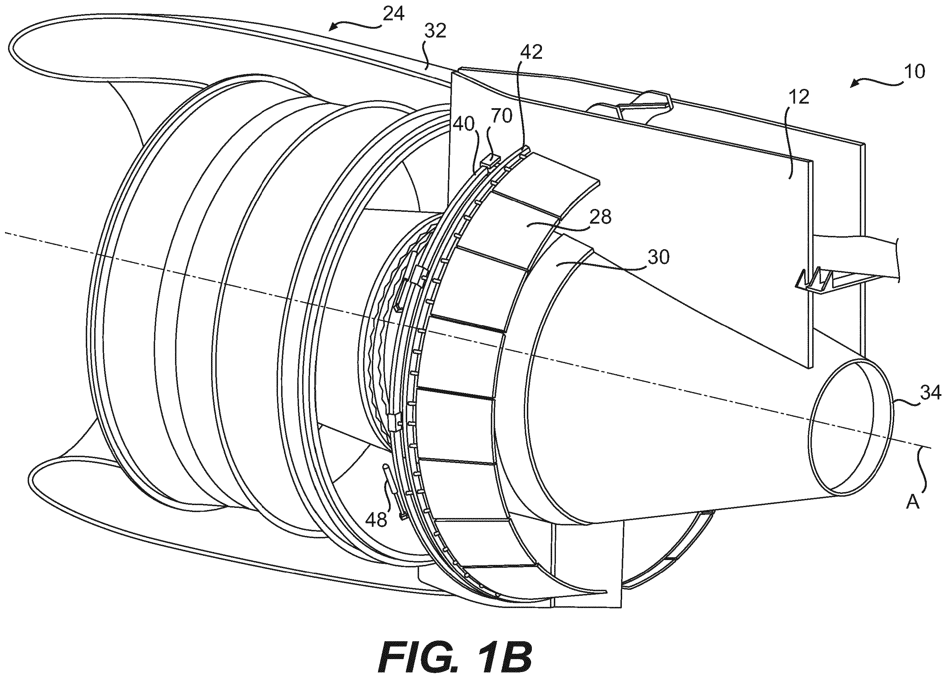

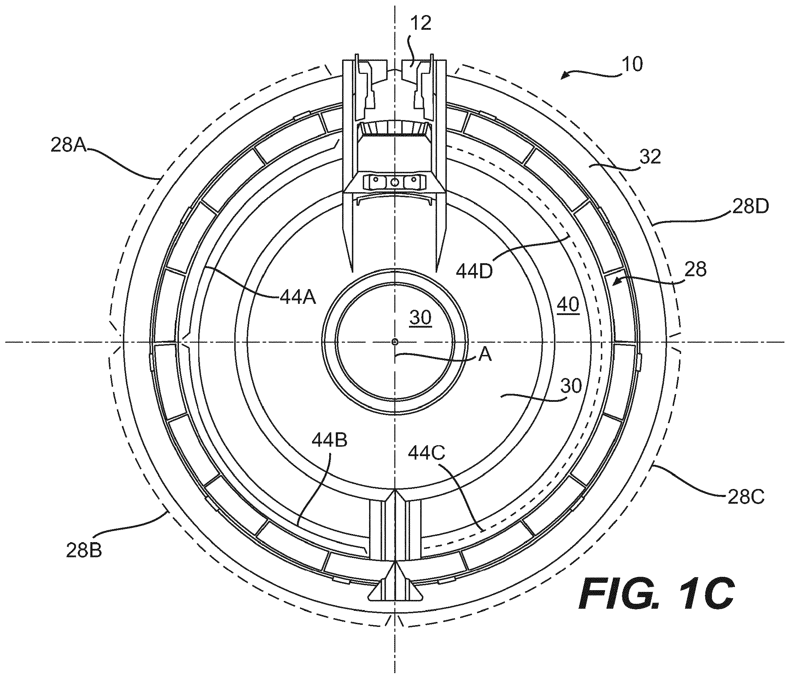

The exemplary turbofan engine 10 is in the form of a high bypass ratio engine mounted within a nacelle assembly 24 in which most of the air pressurized by the fan bypasses the core engine itself for generating propulsion thrust. The fan air F is discharged from the engine 10 through a thrust vectorable fan variable area nozzle (FVAN) 28 (also illustrated in Figures 1B and 1C) defined radially between a core nacelle 30 and a fan nacelle 32. The thrust vectorable FVAN 28 preferably includes a multiple of separately movable segments 28A-28D (four shown). It should be understood that any number of segments may be utilized.

The core exhaust gases C are discharged from the core engine through a core exhaust nozzle 34 defined between the core nacelle 30 and a center plug 36 disposed coaxially therein around an engine longitudinal centerline axis A of the engine 10 and nacelle

The thrust vectorable FVAN 28 of the fan nacelle 32 coaxially surrounds the core nacelle 30 to define a variable diameter nozzle downstream of an annular fan duct D for discharging axially the fan air F pressurized by the upstream fan 14.

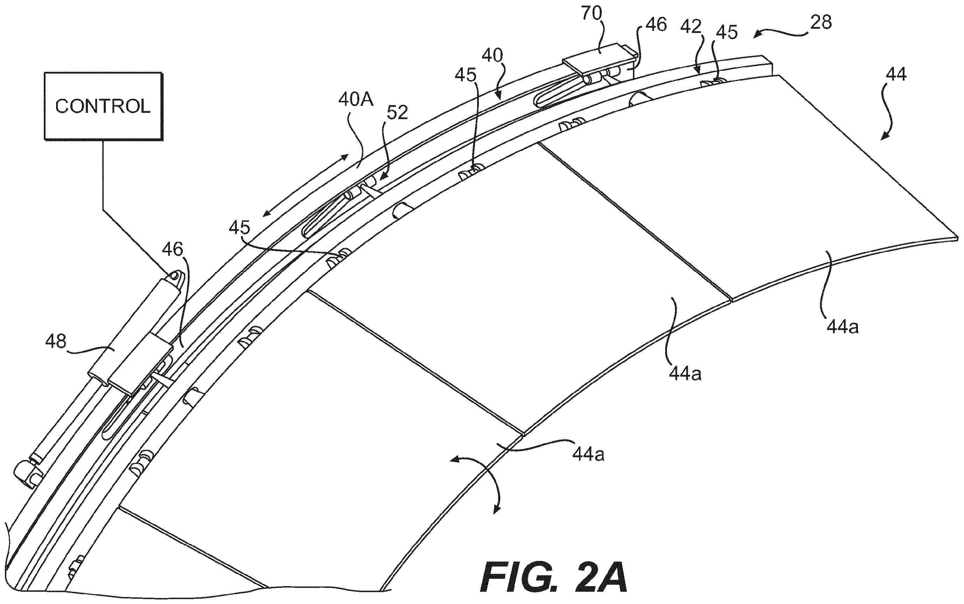

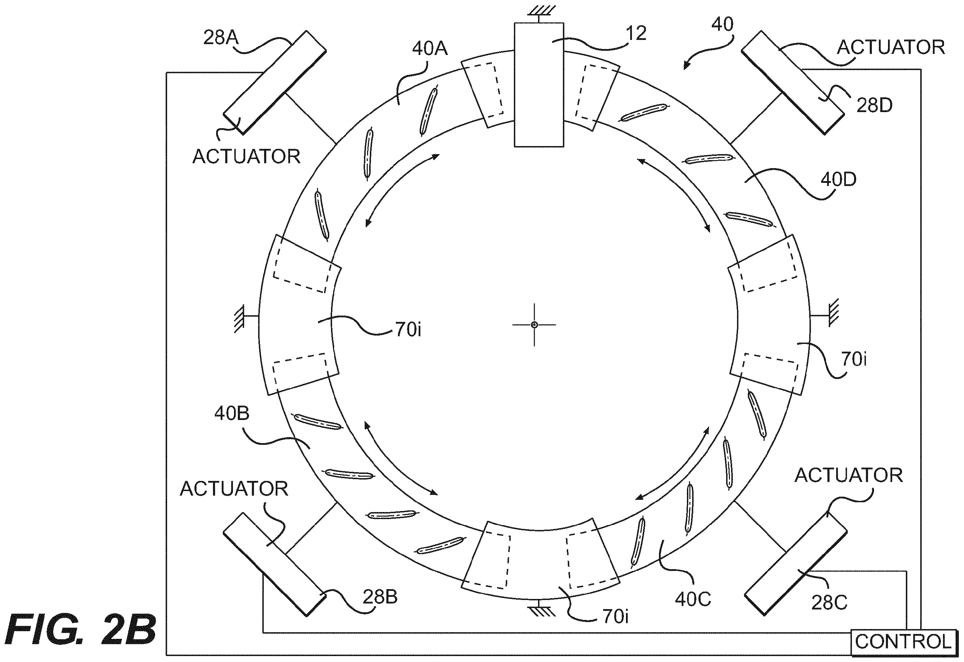

Referring to Figure 2A, a portion of the thrust vectorable FVAN 28 generally includes a synchronizing ring assembly 40, a static ring 42, and a flap assembly 44. The flap assembly 44 is pivotally mounted to the static ring 42 at a multitude of hinges 45 and linked to the synchronizing ring assembly 40 through a linkage 46. An actuator assembly 48 (only one shown) selectively rotates each segment of the FVAN 28A-28D by rotating the associated synchronizing ring segment 40A-40D (Figure 2B) relative the static ring 42 to adjust the associated flap assembly 44 through the linkage 46 to vary the area defined by the thrust vectorable FVAN 28 through which the fan air F is discharged. It should be understood that various actuation systems which asymmetrically moves each segment of the FVAN 28A-28D may also be utilized with the present invention.

Referring to Figure 2B, the synchronizing ring assembly 40 is mounted within a multitude of slider tracks 70 that are affixed within the fan nacelle 32 (Figure 1B). The synchronizer ring segments 40A-40D are each independently rotatable and each adjust an associated adjustable flap assembly segment 44A-44D (Figure 1C). That is, rotation of each synchronizer ring segment 40A-40D independently adjusts the associated adjustable flap assembly segment 44A-44D. Notably, the actuator assembly 48 includes linear actuators which rotate each segment 40A-40D of the synchronizing ring assembly 40 independently to thereby transferring relative significant force through a relatively uncomplicated, low-profile system.

Preferably, the synchronizer ring segments 40A-40D interface with adjacent segments within a synchronizing ring slider interface track 70i which permits for the independent rotation of each synchronizer ring segment 40A-40D by providing clearance therebetween. That is, each synchronizing ring slider interface track 70i are fixed members within which two adjacent synchronizer ring segments 40A-40D are slidably supported for independent movement.

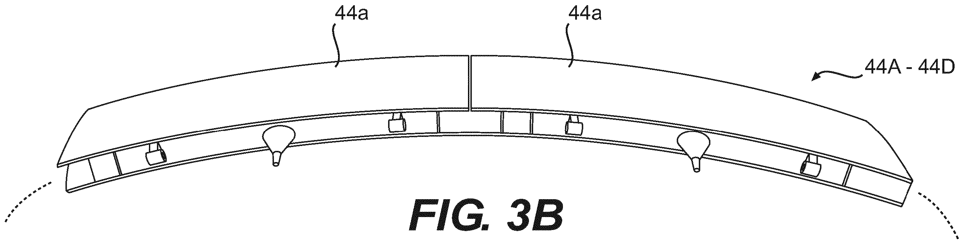

The thrust vectorable FVAN 28 is preferably separated into four segments 28A, 28B, 28C, 28D defined by the synchronizer ring segments 40A-40D and the associated adjustable flap assembly segment 44A-44D. The four segments 28A-28D are each independently adjustable. That is, at the interface between each segment 28A-28D - defined by the synchronizing ring slider interface tracks 70i - there is no nested tongue and groove arrangement such that the flaps on each side of the adjacent segments are not nested when assembled (Figure 3B). It should be understood that a flexible seal arrangement may be located between each segment 28A, 28B, 28C, 28D. It should be further understood that although four segments are illustrated, any number of segments as well as independent flap operation may alternatively or additionally be provided. One such alternative embodiment may provide only an upper and lower segment (28A and 28D are combined and 28B and 28C are combined).

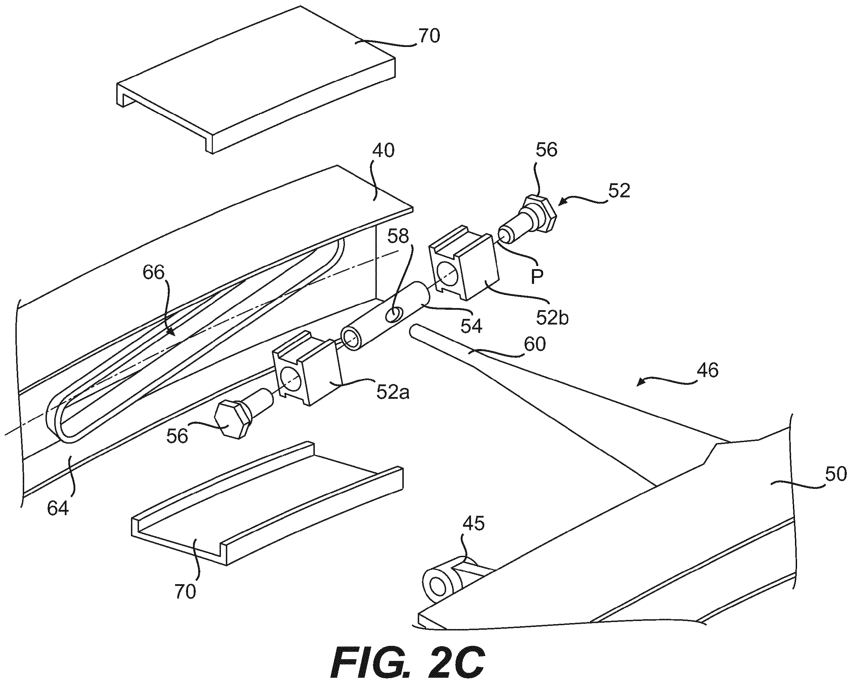

Referring to Figure 2C, the linkage 46 for each flap 44a of the flap assembly 44 generally includes a hinge beam 50, a slider block assembly 52 and a hinge pin 54 mounted to the slider block assembly 52 through a fastener 56. The slider block assembly 52 preferably includes a first slider block 52a and a second slider block 52b between which the hinge pin 54 is mounted through the fasteners 56 for rotation about the longitudinal axis P thereof. The hinge pin 54 includes an aperture 58 which receives a hinge beam rod 60.

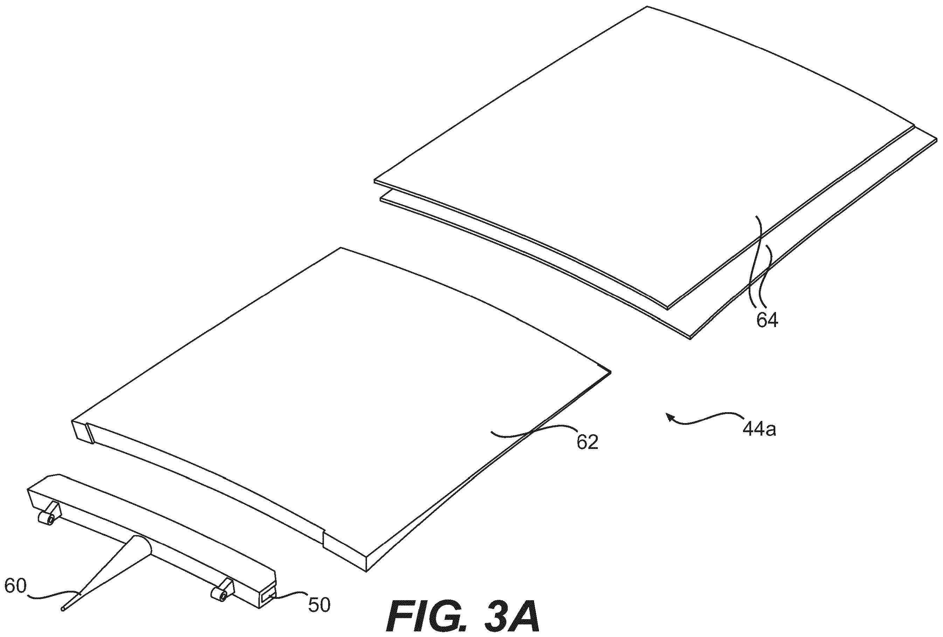

Each flap 44a preferably includes a machined aluminum honeycomb core 62 and carbon fiber skins 64 mounted to the hinge beam 50 (Figure 3A). Each flap 44a in each segment 28A-28D includes a nested tongue and groove arrangement such that the flaps 44a in each segment 28A-28D are nested when assembled (Figure 3B). That is, each flap 44a engages the adjacent flaps 44a to provide a circumferential seal which defines the exit area.

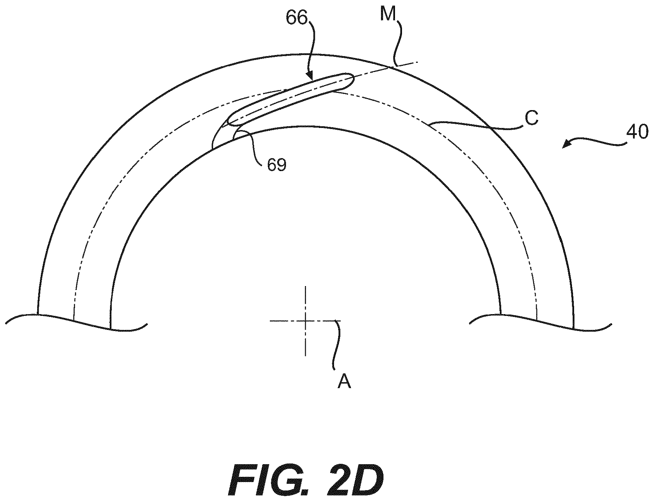

The slider blocks 52a, 52b are located within a slot 66 formed in the synchronizing ring assembly 40. The slots 66 formed within the synchronizing ring assembly 40 are non-circumferentially located about the engine longitudinal centerline axis A. That is, a mean line M defined by each slot 66 is transverse to a concentric circle S defined by the synchronizing ring assembly 40 about axis A (Figure 2D). Preferably, the slots 66 include a radial assembly opening 69 to receive the slider blocks 52a, 52b in an extended length of the slot 66 to facilitate assembly. Alternatively, the slider blocks 52a, 52b may be formed of a multitude of pieces to facilitate assembly into the slot 66 which does not include a radial assembly opening 69.

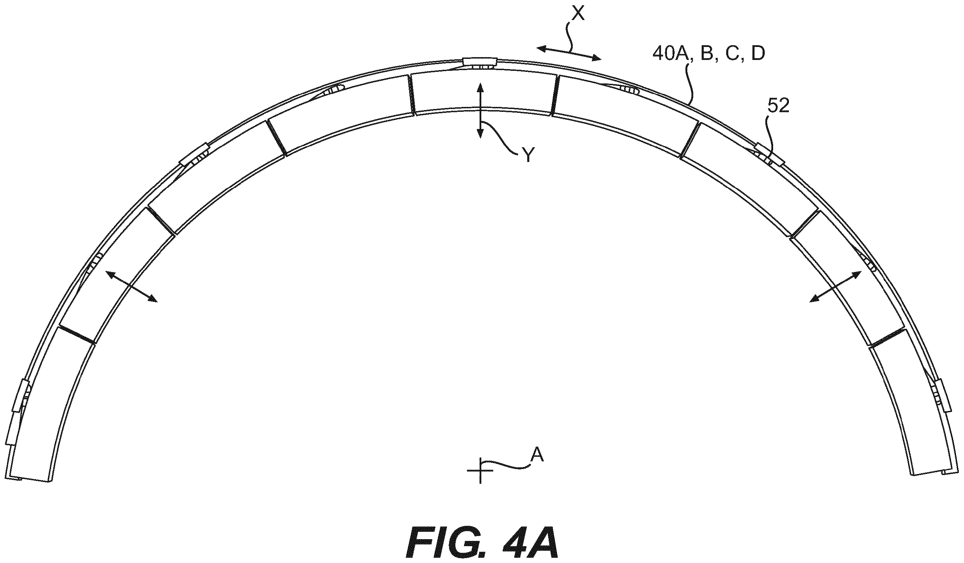

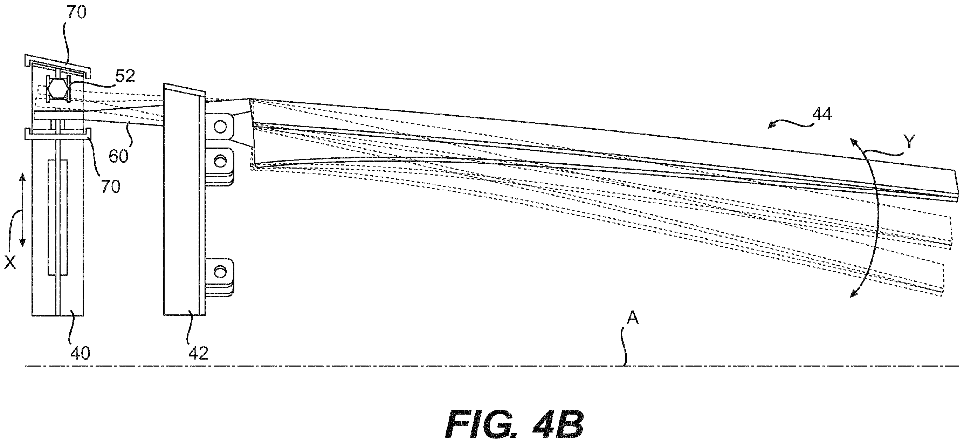

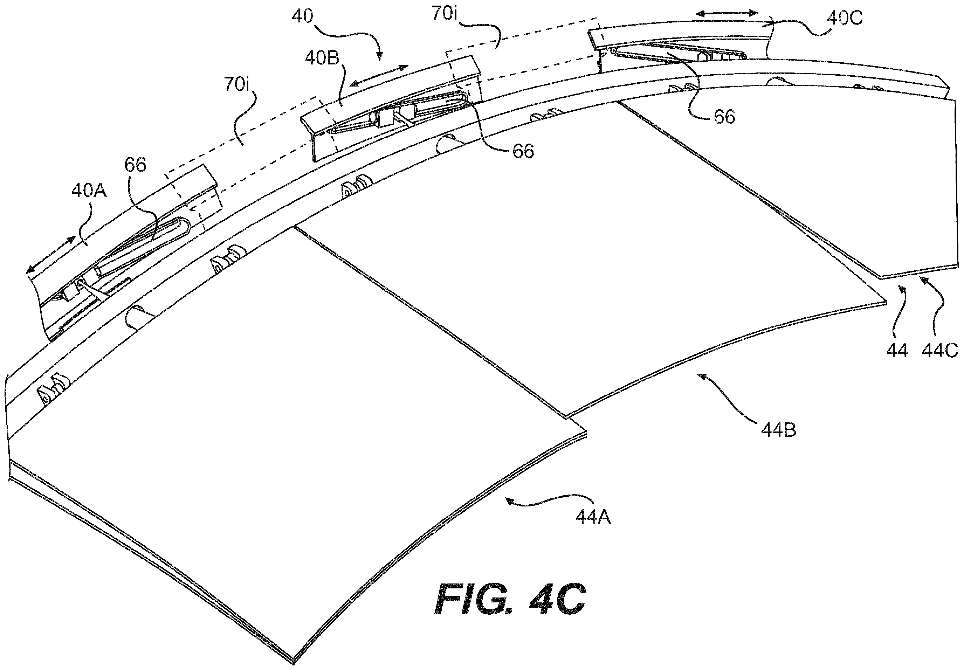

In operation, the actuator assembly 48 independently rotates the synchronizer ring segments 40A-40D of the synchronizing ring assembly 40 circumferentially about the engine longitudinal centerline axis A (double headed arrow X; Figure 4A). Within each synchronizer ring segment 40A-40D, the slider block assembly 52 moves within the slot 66 such that the hinge beam rod 60 converts radial movement to tangential movement at each flap assembly 44A-44D to vary the diameter of the associated flap assembly 44A-44D (illustrated in a multiple of exemplary positions in Figures 4B and 4C). When all the synchronizer ring segments 40A-40D of the synchronizing ring assembly 40 move in unison, the periphery of the annular fan exit area between the fan nacelle and the core nacelle (Figure 1C) is varied. When particular segments 40A-40D of the synchronizing ring assembly 40 are moved separately, the periphery of the annular fan exit area between the fan nacelle and the core nacelle (Figure 1C) provides an asymmetric fan exit area.

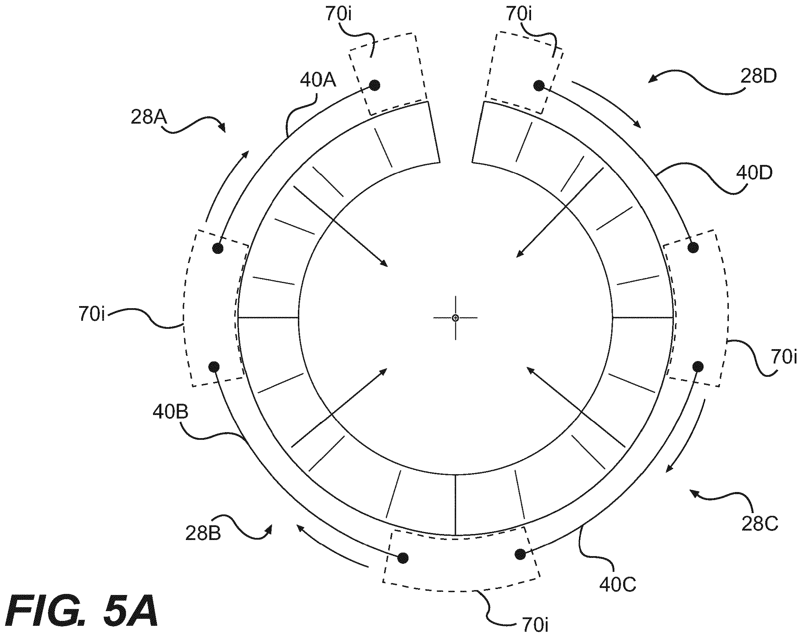

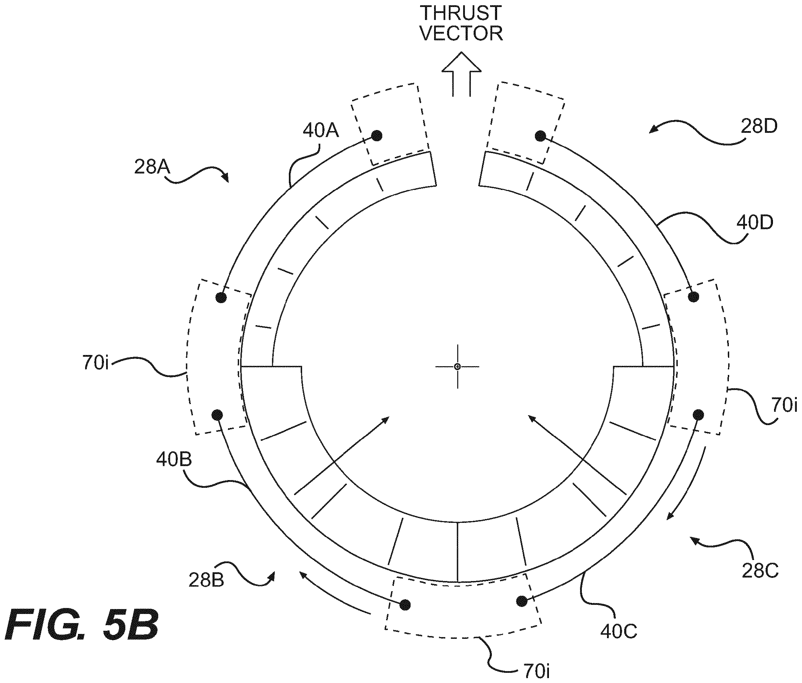

By adjusting the entire periphery of the thrust vectorable FVAN 28 in which all segments 28A-28D are moved simultaneously (Figure 5A; FVAN 28 constricted symmetrically), engine thrust and fuel economy are maximized during each flight regime by varying the fan nozzle exit area. By separately adjusting the segments 28A-28D of the thrust vectorable FVAN 28 to provide an asymmetrical fan nozzle exit area (Figure 5B; only FVAN segments 28B and 28C constricted such that thrust is directionally vectored), engine thrust is selectively vectored to provide, for example only, trim balance or thrust controlled maneuvering.

Preferably, each actuator 48A-48D (Figure 2) or set of actuators utilized in conjunction with each segment 28A-28D of the actuator assembly 48 communicates with an engine controller or the like to adjust the position of each segment 28A-28D of the thrust vectorable FVAN 28. However, other control systems including flight control systems may likewise be usable with the present invention to integrate the thrust vectorable FVAN 28 with an aircraft flight control system. That is, the thrust vectorable FVAN 28 is utilized as another control system integrated with the aerodynamic control surfaces.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A method of varying an annular fan exit throat area of a gas turbine engine (10), the annular fan exit throat area defined between a fan nacelle (32) and a core nacelle (30) at least partially within said fan nacelle (32), the method comprising the steps of:
(A) asymmetrically adjusting a first flap assembly segment (44A...44D) relative a second flap assembly segment (44A...44D) to adjust the annular fan exit throat area, each of the flap assembly segments (44A... 44D) comprising at least one flap with a hinge beam rod (60) coupled to said at least one flap, the flap assembly segments (44A...44D) being pivotally mounted to a static ring (42) mounted to the fan nacelle (32), the asymmetrical adjustment comprising independently rotating synchronizing ring segments (40A ... 40D) of a synchronizing ring assembly (40) relative said static ring (42) to independently adjust said first and second flap assembly segments (44A ... 44D),
wherein each hinge beam rod (60) extends through said static ring (42) and engages a slider block (52) moveable within each of a multitude of slots (66) defined within said synchronizing ring segments (40A ... 40D).

2. A method as recited in claim 1, wherein said step (A) further comprises:
(a) adjusting the flap assembly segments (44A ... 44D) relative the core nacelle (30).

3. A method as recited in claim 1 or 2, wherein said step (A) further comprises:
(a) locating the flap assembly segments (44A ... 44D) at an aft most section of the fan nacelle (32).

4. A method as recited in claim 1, 2 or 3, wherein said step (A) further comprises:
(a) locating the first flap assembly segment (44A) at an upper, aft most section of the fan nacelle (32); and
(b) locating the second flap assembly (44B) segment at a lower, aft most section of the fan nacelle (32).

5. A method as recited in claim 1, 2 or 3, wherein said step (A) further comprises:
(a) locating the first flap assembly segment (44D) at an upper right, aft most section of the fan nacelle (32);
(b) locating the second flap assembly segment (44A) at an upper left, aft most section of the fan nacelle (32);
(c) locating a third flap assembly segment (44C) at a lower right, aft most section of the fan nacelle (32);
(d) locating a fourth flap assembly segment (44B) at a lower left, aft most section of the fan nacelle (32); and
(e) independently controlling each of the first, second, third and forth flap assembly segments (44A ... 44D) to vector thrust.

## Patentansprüche

1. Verfahren zum Verstellen einer ringförmigen Fan-Austrittshalsfläche eines Gasturbinentriebwerks (10), wobei die ringförmige Fan-Austrittshalsfläche zwischen einer Fan-Gondel (32) und einer Kerngondel (30) definiert ist, die sich zumindest teilweise innerhalb der Fan-Gondel (32) befindet, wobei das Verfahren die folgenden Schritte umfasst:
(A) asymmetrisches Einstellen eines ersten Klappenanordnungssegments (44A...44D) relativ zu einem zweiten Klappenanordnungssegment (44A...44D), um die ringförmige Fan-Austrittshalsfläche einzustellen, wobei jedes der Klappenanordnungssegmente (44A...44D) zumindest eine Klappe mit einer Gelenkbalkenstange (60) umfasst, die an die zumindest eine Klappe gekoppelt ist, wobei die Klappenanordnungssegmente (44A...44D) schwenkbar an einem statischen Ring (42) montiert sind, der an der Fan-Gondel (32) montiert ist, wobei die asymmetrische Einstellung das unabhängige Drehen von Synchronisationsringsegmenten (40A...40D) einer Synchronisationsringanordnung (40) relativ zu dem statischen Ring (42) umfasst, um das erste und das zweite Klappenanordnungssegment (44A...44D) unabhängig einzustellen,
wobei sich jede Gelenkbalkenstange (60) durch den statischen Ring (42) erstreckt und einen Schieberblock (52) in Eingriff nimmt, der innerhalb von jedem aus einer Vielzahl von Schlitzen (66) bewegbar ist, die innerhalb der Synchronisationsringsegmente (40A...40D) definiert sind.

2. Verfahren nach Anspruch 1, wobei Schritt (A) ferner Folgendes umfasst:
(a) Einstellen der Klappenanordnungssegmente (44A...44D) relativ zu der Kerngondel (30).

3. Verfahren nach Anspruch 1 oder 2, wobei Schritt (A) ferner Folgendes umfasst:
(a) Platzieren der Klappenanordnungssegmente (44A...44D) an einem hintersten Abschnitt der Fan-Gondel (32).

4. Verfahren nach Anspruch 1, 2 oder 3, wobei Schritt (A) ferner Folgendes umfasst:
(a) Platzieren des ersten Klappenanordnungssegments (44A) an einem oberen, hintersten Abschnitt der Fan-Gondel (32); und
(b) Platzieren des zweiten Klappenanordnungssegments (44B) an einem unteren, hintersten Abschnitt der Fan-Gondel (32).

5. Verfahren nach Anspruch 1, 2 oder 3, wobei Schritt (A) ferner Folgendes umfasst:
(a) Platzieren des ersten Klappenanordnungssegments (44D) an einem oberen rechten, hintersten Abschnitt der Fan-Gondel (32) ;
(b) Platzieren des zweiten Klappenanordnungssegments (44A) an einem oberen linken, hintersten Abschnitt der Fan-Gondel (32) ;
(c) Platzieren eines dritten Klappenanordnungssegments (44C) an einem unteren rechten, hintersten Abschnitt der Fan-Gondel (32);
(d) Platzieren eines vierten Klappenanordnungssegments (44B) an einem unteren rechten, hintersten Abschnitt der Fan-Gondel (32); und
(e) unabhängiges Steuern von jedem von dem ersten, zweiten, dritten und vierten Klappenanordnungssegment (44A...44D) zu Vektorschub.

## Revendications

1. Procédé pour varier une section annulaire de col de sortie de soufflante d'un moteur de turbine à gaz (10), la section annulaire de col de sortie de soufflante étant définie entre une nacelle de soufflante (32) et une nacelle de noyau (30) au moins partiellement à l'intérieur de ladite nacelle de soufflante (32), le procédé comprenant les étapes :
(A) de réglage asymétrique d'un premier segment d'ensemble de volet (44A...44D) par rapport à un deuxième segment d'ensemble de volet (44A...44D) pour régler la section annulaire de col de sortie de soufflante, chacun des segments d'ensemble de volet (44A...44D) comprenant au moins un volet avec une tige de poutre d'articulation (60) couplée audit au moins un volet, les segments d'ensemble de volet (44A...44D) étant montés de manière pivotante sur un anneau (42) monté sur la nacelle de soufflante (32), le réglage asymétrique comprenant des segments d'anneau de synchronisation tournant indépendamment (40A...40D) d'un ensemble d'anneau de synchronisation (40) par rapport audit anneau statique (42) pour régler indépendamment lesdits premier et deuxième segments d'ensemble de volet (44A...44D),
dans lequel chaque tige de poutre d'articulation (60) s'étend à travers ledit anneau statique (42) et vient en prise avec un bloc coulissant (52) pouvant se déplacer à l'intérieur de chacune d'une multitude de fentes (66) définies à l'intérieur desdits segments d'anneau de synchronisation (40A...40D).

2. Procédé selon la revendication 1, dans lequel ladite étape (A) comprend en outre :
(a) le réglage des segments d'ensemble de volet (44A...44D) par rapport à la nacelle de noyau (30).

3. Procédé selon la revendication 1 ou 2, dans lequel ladite étape (A) comprend en outre :
(a) le positionnement des segments d'ensemble de volet (44A...44D) au niveau d'une section la plus à l'arrière de la nacelle de soufflante (32).

4. Procédé selon la revendication 1, 2 ou 3, dans lequel ladite étape (A) comprend en outre :
(a) le positionnement du premier segment d'ensemble de volet (44A) au niveau d'une section supérieure la plus à l'arrière de la nacelle de soufflante (32) ; et
(b) le positionnement du deuxième segment d'ensemble de volet (44B) au niveau d'une section inférieure la plus à l'arrière de la nacelle de soufflante (32).

5. Procédé selon la revendication 1, 2 ou 3, dans lequel ladite étape (A) comprend en outre :
(a) le positionnement du premier segment d'ensemble de volet (44D) au niveau d'une section supérieure droite la plus à l'arrière de la nacelle de soufflante (32) ;
(b) le positionnement du deuxième segment d'ensemble de volet (44A) au niveau d'une section supérieure gauche la plus à l'arrière de la nacelle de soufflante (32) ;
(c) le positionnement d'un troisième segment d'ensemble de volet (44C) au niveau d'une section inférieure droite la plus à l'arrière de la nacelle de soufflante (32) ;
(d) le positionnement d'un quatrième segment d'ensemble de volet (44B) au niveau d'une section inférieure gauche la plus à l'arrière de la nacelle de soufflante (32) ; et
(e) la commande indépendante de chacun des premier, deuxième, troisième et quatrième segments d'ensemble de volet (44A...44D) pour diriger la poussée.
